# EUROPÄISCHE PATENTSCHRIFT

(11) **EP 2 643 707 B1**
(45) Veröffentlichungstag und Bekanntmachung des Hinweises auf die Patenterteilung: **27.07.2016**
(21) Anmeldenummer: 11788812.3
(22) Anmeldetag: 25.11.2011
(51) Int. Cl.: G01S 5/02, G01S 5/12

(54) **ORTUNGSSYSTEM**
POSITIONING SYSTEM
SYSTÈME DE LOCALISATION

(30) Priorität: 26.11.2010 DE 102010052475
(43) Veröffentlichungstag der Anmeldung: 02.10.2013
(73) Patentinhaber: Deutsches Zentrum für Luft- und Raumfahrt e.V., 51147 Köln (DE); Meißner, Ute Marita, 50996 Köln (DE)
(72) Erfinder: MEISSNER, Ute Marita, 50996 Köln (DE); HAHN, Klaus-Uwe, 38176 Wendeburg (DE)
(74) Vertreter: Aisch, Sebastian
(86) Internationale Anmeldenummer: PCT/EP2011/071029
(87) Internationale Veröffentlichungsnummer: WO 2012/069630

(56) Entgegenhaltungen:
- FR-A1- 2 836 554
- US-A- 3 795 911
- US-A- 3 952 308
- US-A- 5 436 632
- US-A- 5 850 197
- US-A1- 2007 040 734
- US-A1- 2008 088 508
- US-A1- 2008 180 325
- US-A1- 2010 220 011
- US-B1- 7 400 956
- ALEX MIKHALEV ET AL: "Passive emitter geolocation using agent-based data fusion of AOA, TDOA and FDOA measurements", INFORMATION FUSION, 2007 10TH INTERNATIONAL CONFERENCE ON, IEEE, PI, 1. Juli 2007 (2007-07-01), Seiten 1-6, XP031194018, ISBN: 978-0-662-45804-3

## Beschreibung

Die Erfindung betrifft ein bodenbasiertes Ortungssystem zur Ermittlung einer Ortsposition eines beweglichen Objektes. Die Erfindung betrifft auch ein Verfahren hierzu.

### Stand der Technik

Bei vielen automatisiert ablaufenden Handlungen ist das Bestimmen der Ortsposition ein wesentlicher Bestandteil, damit ein Prozess voll automatisiert ablaufen kann. Dies betrifft letztlich jedoch nicht nur automatisierte Handlungsabläufe, sondern auch jegliche Form von Überwachungsverfahren, bei denen die Ortsposition bzw. die Kenntnis über die eigene Position einen essentiellen Bestandteil des Verfahrens bildet.

Bei der Frage nach der Art und Weise der Bestimmung der Position sind letztendlich zwei entscheidende Kriterien wichtig: Genauigkeit und Verfügbarkeit. Je sicherheitskritischer dabei der entsprechende Anwendungsfall ist, desto höher sind die Anforderungen an die Genauigkeit oder Verfügbarkeit zu stellen. So weisen beispielsweise GNS-Systeme (Global Navigation Satellite System), wie beispielsweise das GPS, eine nahezu lückenlose Verfügbarkeit auf, wenn man einmal von dem Umstand der Abschattung absieht, während die Genauigkeit von äußeren Randbedingungen abhängt und im Allgemeinen für hoch präzise Aufgabenstellungen einschl. Höheninformationen nicht geeignet ist, da hier die Genauigkeit nicht ausreicht.

So ist beispielsweise bei entsprechenden Flugsystemen, wie Fluglandesystemen, eine hoch-genaue Höheninformation notwendig, damit ein Flugzeug voll automatisch sicher auf einem Flughafen landen kann. Dies ist mit dem heute bekannten GPS schon deshalb so nicht möglich, da die hierfür notwendige hoch genaue Höhenangabe mit Hilfe eines solchen Satellitennavigationssystems nicht ermittelbar ist.

So ist beispielsweise aus der US 6,469,654 B1 ein Landesystem für Flugzeuge beschrieben, bei dem von einer am Boden installierten Sendestation ein Signal ausgesendet wird, das von einem an dem Flugzeug angeordneten Transponder, die normalerweise für das Sekundärradar notwendig sind, reflektiert werden. Am Boden befinden sich einige Empfangseinheiten, welche das von dem Transponder zurückgesendete Signal empfangen, um daraus schließlich die Position des Flugobjektes am Boden ermitteln zu können. Ein ähnliches Prinzip, bei dem ebenfalls ein am Flugzeug angeordneter Transponder verwendet wird, ist aus der US 5,017,930 bekannt.

US 2010/0220011 A1 definiert die Ermittlung der Position eines Mobiltelefons anhand der Kombination von Abstands-, Winkel- und Dopplermessungen. US 7,400,956 B1 definiert die Bestimmung der Raumlage eines beweglichen Objekts anhand der ermittelten Position an dem Objekt angeordneter GPS-Empfänger.

Der große Nachteil bei diesen Systemen besteht jedoch darin, dass die Verarbeitungszeit bei dem an dem Flugzeug angeordneten Transponder schwankt und von dem System als solches nicht bekannt ist, so dass die Signallaufzeit des hingesendeten, verarbeiteten und zurückgesendeten Signals einer Ungenauigkeit unterliegt, die auf die unbekannte Verarbeitungszeit am Flugobjekt selber zurückzuführen ist. Hieraus entsteht eine Ungenauigkeit in der Entfernungsfeststellung, was letztlich in einer Ungenauigkeit der Ortsposition des Flugzeugs resultiert.

### Aufgabe

Im Hinblick hierauf ist Aufgabe der vorliegenden Erfindung, ein verbessertes Ortungssystem anzugeben, das eine hoch genaue Position und Raumlage eines Objektes ermitteln kann.

### Lösung

Die Aufgabe wird gelöst durch das bodenbasierte Ortungssystem der eingangs genannten Art zur Ermittlung einer Ortsposition eines beweglichen Objektes mit einer Mehrzahl von ortsfesten Bodenstationen, die jeweils eine Sende- und/oder Empfangseinheit aufweisen und mit mindestens einer an dem Objekt angeordneten objektfesten Sende- und/oder Empfangseinheit, wobei die Sendeeinheiten zum Enden von Positionssignalen und die Empfangseinheiten zum Empfangen der von den Sendeeinheiten ausgesendeten Positionssignalen eingerichtet sind und das bodenbasierte Ortungssystem wenigstens eine mit zumindest einem Teil der Sende- und/oder Empfangseinheiten kommunizierend verbundenen Positionsermittlungseinheit aufweist, die zum Ermitteln von Entfernungen zwischen den ortsfesten Sende- und/oder Empfangseinheiten der Bodenstationen und der mindestens einen objektfesten Sende- und/oder Empfangseinheit des Objektes, zur Ermittlung zumindest eines Empfangswinkels der empfangenen Positionssignale an der jeweiligen Empfangseinheit und zur Ermittlung einer Relativgeschwindigkeit zwischen mindestens einer ortsfesten Sende- und/oder Empfangseinheiten der Bodenstationen und der mindestens einen objektfesten Sende- und/oder Empfangseinheit des Objektes in Abhängigkeiten von den Positionssignalen, die von den ortsfesten Sendeeinheiten gesendet und von der mindestens einen objektfesten Empfangseinheit empfangen wurden und/oder die von der mindestens einen objektfesten Sendeeinheit gesendet und von den ortsfesten Empfangseinheiten empfangen wurden, wobei die mindestens eine Positionsermittlungseinheit zur Ermittlung der Ortsposition der mindestens einen objektfesten Sende- und/oder Empfangseinheit in Abhängigkeit von den ermittelten Entfernungen, zumindest einem der Empfangswinkel und zumindest einem der ermittelten Relativgeschwindigkeiten eingerichtet ist, wobei das Ortungssystem zumindest zwei an dem Objekt angeordnete objektfeste Sende- und/oder Empfangseinheiten aufweist, die voneinander beabstandet angeordnet sind, wobei die Positionsermittlungseinheit zum Ermitteln der Raumlage des Objektes in Abhängigkeit von den Ortspositionen der jeweiligen Sende- und/oder Empfangseinheiten eingerichtet ist.

Das erfindungsgemäße bodenbasierte Ortungssystem weist mehrere Bodenstationen auf, an denen eine Sende- und/oder Empfangseinheit angeordnet ist, wobei die Bodenstationen hinreichend voneinander beabstandet sind. Darüber hinaus befindet sich mindestens eine Sende- und/oder Empfangseinheit an einem beweglichen Objekt, dessen Ortsposition mit Hilfe des vorliegenden bodenbasierten Ortungssystems ermittelt werden soll Die Sendeeinheiten, ob nun an den Bodenstationen oder an dem Objekt angeordnet, sind zum Aussenden von Positionssignalen eingerichtet, während die Empfangseinheiten zum Empfangen solcher ausgesendeten Positionssignalen eingerichtet sind.

Mit Hilfe einer Positionsermittlungseinheit, die mit den Sende- und/oder Empfangseinheiten kommunizierend verbunden ist, lässt sich anhand der empfangenen Positionssignale die Entfernung, der Empfangswinkel und eine Relativgeschwindigkeit des Objektes ermitteln. Die Ermittlung der Entfernung zwischen der ortsfesten Sende- und/oder Empfangseinheit und der objektfesten Sende- und/oder Empfangseinheit lässt sich dabei anhand der Signallaufzeit eines Signals von einer Sendeeinheit zu einer Empfangseinheit vorzugsweise ermitteln. Der Empfangswinkel kann vorteilhafterweise mit Hilfe von mehreren an den Empfangseinheiten angeordneten Empfangsantennen ermittelt werden, wobei beispielsweise der Winkel anhand einer Phasenverschiebung des Empfangssignals an den Empfangsantennen ermittelbar ist. Die Relativgeschwindigkeit letztlich kann aus einer Dopplerverschiebung des empfangenen Positionssignals hergeleitet werden.

Die Positionsermittlungseinheit ist nun derart eingerichtet, dass sie in Abhängigkeit der ermittelten Entfernung, des Empfangswinkels und der ermittelten Relativgeschwindigkeit hoch genau die Position des Objektes insbesondere im dreidimensionalen Raum bestimmen kann. Durch die Kombination der drei Messverfahren lässt sich dabei das Ergebnis der Positionsbestimmung in der Genauigkeit erheblich verbessern, so dass ein solches System auch für den Flugbetrieb geeignet wäre. So kann beispielsweise mit Hilfe der Entfernungsmessung eine erste Ortsposition ermittelt werden, die mit Hilfe der Empfangswinkel weiter angenähert werden kann. Mit Hilfe der Relativgeschwindigkeit lässt sich ein Bewegungs- bzw. Geschwindigkeit ableiten, welcher bei der Ermittlung der Ortsposition zur Erhöhung der Genauigkeit mit verwendet wird. So ist es beispielsweise denkbar, dass mit Hilfe eines statistischen Verfahrens die Ergebnisse aller drei Ergebnisse zu einer Ortsposition zusammengefasst werden.

An dem Objekt werden mehr als eine Sende- und/oder Empfangseinheit, beispielsweise für Redundanzzwecke beabstandet voneinander angeordnet, so dass für jede der objektfesten Sende- und/oder Empfangseinheiten die hoch genaue Ortsposition ermittelt wird, wobei sich aus den einzelnen Ortspositionen dann die Raumlage des Objektes ableiten lässt. Denn ist die relative Beabstandung der Sende- und/oder Empfangseinheiten an dem Objekt bekannt, so lässt sich aufgrund der unterschiedlichen Ortspositionen der Sende- und/oder Empfangseinheiten an dem Objekt mit Hilfe der relativen Distanz der entsprechenden Einheiten zueinander die Raumlage ableiten.

Dabei ist beispielsweise in einer ersten Alternative die Positionsermittlungseinheit auf dem Objekt selber angeordnet und mit der objektfesten Empfangseinheit derart verbunden, dass die von der Empfangseinheit empfangene Positionssignale bzw. die daraus ableitbaren Informationen an die Positionsermittlungseinheit weitergeleitet werden können. Die Bodenstationen weisen dabei entsprechend Sendeeinheiten auf, die diese Positionssignale aussenden, damit das Objekt seine Position selbstständig und autark anhand dieser von den Bodenstationen ausgesendeten Positionssignale bestimmen kann. Selbstverständlich sind dabei die Ortspositionen der ortsfesten, an den Bodenstationen angeordneten Sendeeinheiten dem Objekt bzw. der Positionsermittlungseinheit bekannt oder werden mit Hilfe von in den Positionssignalen kodierbaren Informationen, wie später noch ausgeführt wird, dem Objekt übermittelt.

In einer zweiten Alternative ist die Positionsermittlungseinheit mit dem an den Bodenstationen angeordneten objektfesten Empfangseinheiten verbunden, während an dem Objekt eine entsprechende Sendeeinheit zum Aussenden von Positionssignalen angeordnet ist. Empfangen die Empfangseinheiten, die auf den voneinander beabstandet angeordneten Bodenstationen angeordnet sind, nun dieses von dem bewegten Objekt ausgesendeten Positionssignal, so wird dies an die Positionsermittlungseinheit weitergeleitet, woraus sich dann die entsprechenden Informationen ableiten lassen und die Position des Objektes bzw. der Sendeeinheit an dem Objekt errechnen lässt. In dieser Alternative wird es somit möglich, dass die Position eines Objektes durch eine Zentrale bzw. eine entsprechende Bodenstation ermittelt werden kann, ohne dass es hierfür weitere Gerätschaften, wie beispielsweise Radar oder ähnliches benötigt werden.

In einer dritten Alternative weisen die voneinander beabstandet angeordneten ortsfesten Bodenstationen jeweils eine Sende- und eine Empfangseinheit auf, während an dem Objekt ebenfalls zumindest eine Sende- und Empfangseinheit angeordnet ist. Darüber hinaus sind die ortsfesten Empfangseinheiten jeweils mit einer Positionsermittlungseinheit verbunden, während auf dem Objekt ebenfalls eine Positionsermittlungseinheit angeordnet ist, die mit der dortigen Empfangseinheit verbunden ist. In dieser alternativen Ausführungsform, die Ortsposition sowohl von dem Objekt selber als auch von den Bodeneinheiten ermittelt, so dass das Objekt nicht nur seine Ortsposition selber kennt, sondern die Position auch außerhalb des Objektes durch andere ermittelbar ist. In dieser Alternative lässt sich somit sowohl von dem Objekt als auch von der Bodenstation die Position des Objektes unabhängig voneinander ermitteln, was der Ausfallsicherheit erhöht und die Fehlerdiagnose, wie weiter unten noch beschrieben wird, erheblich vereinfacht.

In allen drei Alternativen wird somit hoch genau mit Hilfe der zugrunde gelegten Messverfahren die Ortsposition des Objektes bestimmt, so dass diese nunmehr für weitere Anwendungen verwendet werden kann. So ist es beispielsweise denkbar, dass mit Hilfe eines solchen bodenbasierten Ortungssystems Flugzeuge bei der Flugführung unterstützt werden. Denkbar ist aber auch, dass in Rangierbahnhöfen so die hoch genaue Position von Triebfahrzeugen oder Waggons ermittelbar ist. Ein anderer Anwendungsfall wäre im Rahmen von engen Hafeneinfahrten denkbar, bei denen hoch genau die Position von Schiffen oder anderen Wasserfahrzeugen ermittelt werden soll.

Vorteilhafterweise sind die ortsfesten Sendeeinheiten, die an den Bodenstationen angeordnet sind, mit einer Steuereinheit verbunden, die zum synchronen Aussenden der Positionssignale mittels der Sendeeinheiten eingerichtet ist. Dabei können die Signallaufzeiten von der Steuereinheit hin zu den beabstandeten Bodenstationen kompensiert werden, da diese im Vorfeld bekannt sind. Somit lässt sich die Synchronisation des Aussendens dieser Positionssignale erheblich erhöhen, was die Genauigkeit der Positionsermittlung erhöht. Denn bei der Bestimmung der Entfernung mittels der Signallaufzeit ist es von entscheidender Bedeutung, dass die Sendeeinheiten ihre Positionssignale derart synchron aussenden, dass die Empfangseinheit die Signallaufzeit möglichst genau bestimmen kann.

Um die Ausfallsicherheit bzw. die Gewährleistung der sicheren Funktionsweise sicherzustellen, ist es ganz besonders vorteilhaft, wenn das bodenbasierte Ortungssystem derart eingerichtet ist, dass es die Funktionsweise der ortsfesten Sende- und/oder Empfangseinheiten verifizieren kann. Dazu sind die ortsfesten Empfangseinheiten an den Bodenstationen derart eingerichtet, dass sie die Positionssignale, die von den jeweils anderen Sendeeinheiten der jeweils anderen Bodenstationen ausgesendet werden, ebenfalls empfangen und somit in Abhängigkeit dieser empfangenen Positionssignale die Funktionsweise der einzelnen Sender der Bodenstationen verifizieren können. So ist es beispielsweise denkbar, dass die Positionsermittlungseinheit, die mit den ortsfesten Empfangseinheiten in Verbindung steht, anhand dieser von den ortsfesten Sendern ausgesendeten Positionssignale die Position der Bodenstation ermittelt und anhand dieser so ermittelten Ortspositionen der Bodenstation die Funktionsweise des Ortungssystems verifiziert, beispielsweise indem die ermittelten Ortspositionen der bekannten hoch genauen Ortsposition der Bodenstation verglichen wird. Somit lassen sich Fehlfunktionen, aber auch entsprechende Störsender mit einem kriminellen Hintergrund frühzeitig sicher erkennen.

Denkbar und besonders vorteilhaft ist es aber auch, wenn die Funktionsweise des bodenbasierten Ortungssystems derart verifiziert wird, dass sowohl die von dem Objekt als auch die von der Bodenstation ermittelten Ortspositionen verglichen werden (Alternative 3). Entstehen hierbei große Abweichungen, so kann daraus abgeleitet werden, dass hier eine Fehlfunktion des Systems vorliegt, auf die schnellstmöglich reagiert werden muss. Die Ortspositionen können dabei mit Hilfe eines normalen Ortungssystems ausgetauscht werden. Ganz besonders vorteilhaft ist es selbstverständlich dabei, wenn die ermittelten Ortspositionen beim erneuten Aussenden von Positionssignalen mit eben diesen Positionssignalen als Daten kodiert werden, wobei die entsprechende Gegenstation (Empfangseinheit) aus diesen Positionssignalen dementsprechende Nutzdaten extrahieren kann, so dass die mitgesendete Ortsposition mit einer ermittelten Ortsposition verglichen werden kann.

Ganz besonders vorteilhaft ist es nun, wenn, wie oben bereits angedeutet, die Sendeeinheiten zum Kodieren von Informationen in die Positionssignale und zum Aussenden dieser Positionssignale eingerichtet sind. So lassen sich, sofern die entsprechenden Informationen der Sendeeinheit vorliegen, entsprechende Informationen in diese Positionssignale kodieren, die dann, sobald sie von der Empfangseinheit empfangen wurden, von dieser dann extrahiert werden können. Diese Art der Informationsübertragung ist sowohl von dem Objekt zu den Bodenstationen als auch von den Bodenstationen zu dem Objekt denkbar und ermöglicht den Austausch von Informationen ohne weitere Kapazitäten zu belegen.

So können beispielsweise bei Flugobjekten Flugpunkte bzw. entsprechende Fluginformationen übertragen werden. Denkbar ist aber auch, dass die jeweils kurz zuvor ermittelte Ortsposition beim nächsten Aussenden der Positionssignale mit kodiert wird, damit ein Vergleich zwischen den Ortspositionen, die von dem Objekt ermittelt werden und die von den Bodenstationen ermittelt werden, durchgeführt werden kann.

Vorteilhafterweise wird für das Aussenden der Positionssignale eine Trägerfrequenz gewählt, die von dem bekannten GNS-Systemen nicht verwendet wird, damit keine gegenseitige Störungen auftreten können und diese Systeme im Zweifelsfall zusätzlich zu dem erfindungsgemäßen bodenbasierten Ortungssystem verwendet werden können.

Die Aufgabe der vorliegenden Erfindung wird auch mit dem Verfahren der eingangs genannten Art gelöst mit den Schritten:
- Aussenden von Positionssignalen mittels mehrerer am Boden angeordneten ortsfester Sendeeinheiten und Empfangen der Positionssignale mittels mindestens einer an dem Objekt angeordneten objektfesten Empfangseinheit und/oder Aussenden von Positionssignalen mittels mindestens einer an dem Objekt angeordneten Sendeeinheit und Empfangen der Positionssignale mittels mehrerer am Boden angeordneter ortsfester Empfangseinheiten,
- Ermitteln von Entfernungen zwischen den ortsfesten Sende- und/oder Empfangseinheiten und der mindestens einen objektfesten Sende- und/oder Empfangseinheit, eines Empfangswinkels der empfangenen Positionssignale an der jeweiligen Empfangseinheit und einer Relativgeschwindigkeit zwischen mindestens einer der ortsfesten Sende- und/oder Empfangseinheiten und der mindestens einen objektfesten Sende- und/oder Empfangseinheit in Abhängigkeit von den empfangenen Positionssignalen, und
- Ermitteln einer Ortsposition von mindestens einem Objekt der Sende- und/oder Empfangseinheit in Abhängigkeit von den ermittelten Entfernungen, dem mindestens einen Empfangswinkel und der mindestens einen Relativgeschwindigkeit.

Vorteilhafte Ausgestaltungen des erfindungsgemäßen Verfahrens finden sich in den entsprechenden Unteransprüchen.

Die Erfindung wird anhand der beigefügten Zeichnung beispielhaft näher erläutert.

Es zeigt:

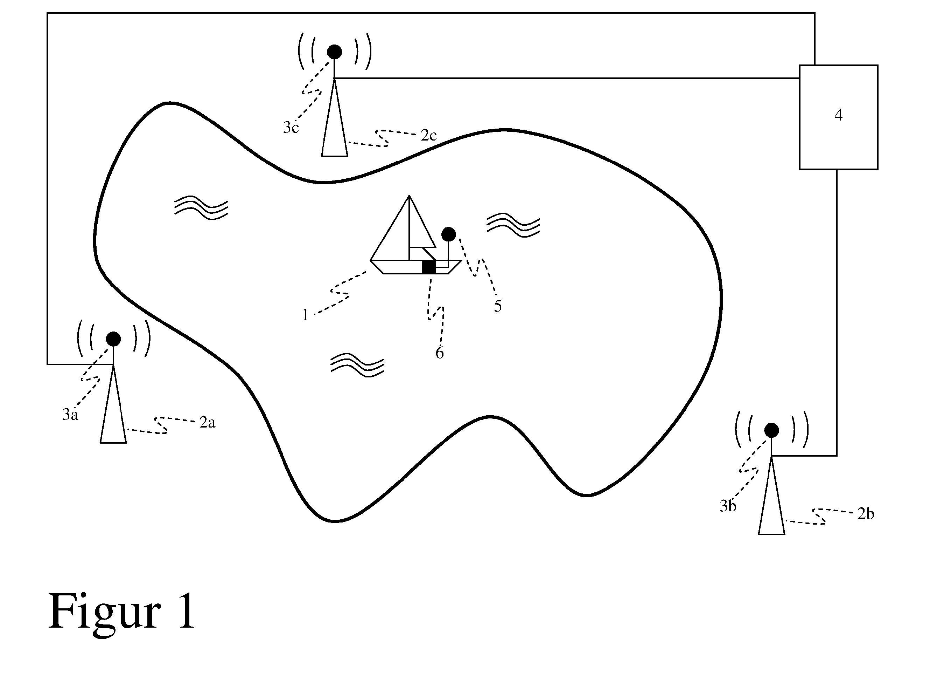

- Figur 1: - schematische Darstellung eines bodenbasierten Ortungssystems am Beispiel eines Wasserfahrzeuges.

Figur 1 zeigt schematisch das erfindungsgemäße bodenbasierte Ortungssystem mit dem im Ausführungsbeispiel der Figur 1 ein Wasserfahrzeug 1 geortet werden soll, d.h. die Position des Wasserfahrzeugs 1 soll bestimmt werden. Selbstverständlich sind auch andere Anwendungsfälle denkbar, so dass der Anwendungsbereich auf das Ausführungsbeispiel 1 nicht beschränkt ist.

In der Nähe eines Wassergebietes befinden sich eine Reihe von Bodenstationen 2a bis 2c, die jeweils eine Sende- und/oder Empfangseinheit 3a bis 3c aufweisen. Die Empfangseinheiten 3a bis 3c sind mit einer am Boden und in der Nähe der Bodenstation 3a bis 3c angeordneten Positionsermittlungseinheit 4 verbunden.

An dem Wasserfahrzeug 1 ist darüber hinaus eine objektfest Sende- und/oder Empfangseinheit 5 angeordnet, die in kommunizierender Art und Weise mit einer objektfesten Positionsermittlungseinheit 6 verbunden ist.

In dem Ausführungsbeispiel der Figur 1 werden nun von den ortsfesten Sendeeinheiten 3a bis 3c Positionssignale ausgesendet, die von der objektfesten Empfangseinheit 5 des Wasserfahrzeugs 1 empfangen werden können. Mit Hilfe der objektfesten Positionsermittlungseinheit 6 wird nun in Abhängigkeit der Signallaufzeit eines jeden Positionssignals, das von den Sendeeinheiten 3a bis 3c ausgesendet wird, die Entfernung zu der jeweiligen Sendeeinheit 3a bis 3c ermittelt. Darüber hinaus wird mit Hilfe von mehreren an der Empfangseinheit angeordneten Empfangsantennen der jeweilige Empfangswinkel für jedes Positionssignal der ortsfesten Sendeeinheiten 3a bis 3c bestimmt, wobei die ermittelten Empfangswinkel dann an die Positionsermittlungseinheit 6 weitergeleitet werden. Bewegt sich das Objekt, so lässt sich schließlich noch bezüglich jeder ortsfesten Sendeeinheit 3a bis 3c anhand einer Dopplerverschiebung der Positionssignale die Relativgeschwindigkeit des Wasserfahrzeugs zu jeder Sendeeinheit 3a bis 3c ermitteln. Auch diese Information wird an die potenzielle Ermittlungseinheit 6 weitergeleitet.

Aus der Kombination dieser drei Messergebnisse lässt sich dann hoch genau die Position der objektfesten Empfangseinheit 5 ermitteln, wobei anhand der hoch genauen Ortsposition der Empfangseinheit 5 dann auf die Position des Objekts geschlossen werden kann.

Darüber hinaus ist auch der umgekehrte Fall denkbar, dass von der Sende- und/oder Empfangseinheit 5 ein Positionssignal ausgesendet wird, das von den ortsfesten Empfangseinheiten 3a bis 3c empfangen wird. Auch aus diesen von den ortsfesten Empfangseinheiten 3a bis 3c empfangenen Positionssignal lassen sich die Entfernung, der Empfangswinkel sowie eine mögliche Relativgeschwindigkeit ermitteln, die entweder in der Positionsermittlungseinheit 4 ermittelt werden oder an diese weitergeleitet werden, so dass sich hieraus aus der Kombination der Ermittlungsergebnisse dann die Ortsposition der Sendeeinheit 5 des Wasserfahrzeugs 1 ermitteln lässt.

In der bereits erwähnten dritten Alternative lässt sich das Ortungssystem auch dahingehend erweitern, dass sowohl von der Positionsermittlungseinheit 6, die auf dem Wasserfahrzeug 1 angeordnet ist, als auch an der ortsfesten Positionsermittlungseinheit 4, die mit den ortsfesten Sende- und/oder Empfangseinheiten 3a bis 3c verbunden ist, jeweils eine Ortsposition ermitteln, die dann zur Verifikation beispielsweise miteinander verglichen werden können. Hierdurch lässt sich die Genauigkeit bzw. die Ausfallsicherheit des Systems erhöhen.

Vorteilhafterweise lassen sich mit Hilfe der Positionssignale auch Informationen entsprechend weiterleiten, so dass hierfür nicht notwendigerweise weitere Funksysteme nötig sind. Wurde beispielsweise von der objektfesten Positionsermittlungseinheit 6 eine Ortsposition der Empfangseinheit 5 ermittelt, so lässt sich beim erneuten Aussenden eines Positionssignals die ortsfesten Empfangseinheiten 3a bis 3c diese Ortsposition in dem Positionssignal kodieren, die dann, sobald die empfangen wurden, entsprechend extrahiert werden können. Anhand der gerade empfangenen Positionssignale wird dann mit Hilfe der ortsfesten Positionsermittlungseinheit 4 die Ortsposition ermittelt und mit der in dem Positionssignal allen enthaltenen Ortspositionen verglichen, so dass die Positionsermittlungseinheit 4 sowohl Kenntnis über die selbst ermittelten Ortspositionen hat, als auch die von dem Wasserfahrzeug 1 ermittelten Ortspositionen hat. Ein Vergleich beider Ortspositionen, die auf unterschiedlichen Wegen ermittelt wurden, erhöht die Genauigkeit und Ausfallsicherheit.

In einem andern Ausführungsbeispiel, beispielsweise bei einem Flugzeug, lassen sich mit Hilfe dieser Informationen Wegpunkte oder Flugkorridore vorgeben, wie das Flugzeug abzufliegen hat.

Vorteilhafterweise ist der vollständige Datensatz eines solchen Positionssignals möglichst kurz, damit die Positionsdatenempfänger nach Abschaltung in kürzester Zeit wieder neu initialisiert werden können. Darüber hinaus lässt sich durch die Erhöhung der Sendefrequenz eine höhere Ermittlungsrate erreichen, wobei dabei vorteilhafterweise auch die zu übertragende Nutzdatenrate erhöht wird.

## Patentansprüche

1. Bodenbasiertes Ortungssystem zur Ermittlung einer Ortsposition eines beweglichen Objektes (1) mit einer Mehrzahl von ortsfesten Bodenstationen (2a - 2c), die jeweils eine Sende- und/oder Empfangseinheit (3a - 3c) aufweisen, und mit mindestens einer an dem Objekt (1) angeordneten objektfesten Sende- und/oder Empfangseinheit (5), wobei die Sendeeinheiten zum Senden von Positionssignalen und die Empfangseinheiten zum Empfangen der von den Sendeeinheiten gesendeten Positionssignale eingerichtet sind und das bodenbasierte Ortungssystem wenigstens eine mit zumindest einem Teil der Sende- und/oder Empfangseinheiten (3a - 3c, 5) kommunizierend verbundenen Positionsermittlungseinheit (4, 6) aufweist, die zum Ermitteln von Entfernungen zwischen den ortsfesten Sende- und/oder Empfangseinheiten (3a - 3c) der Bodenstationen (2a - 2c) und der mindestens einen objektfesten Sende- und/oder Empfangseinheit (5) des Objektes (1), zur Ermittlung zumindest eines Empfangswinkels der empfangenen Positionssignale an der jeweiligen Empfangseinheit und zur Ermittlung einer Relativgeschwindigkeit zwischen mindestens einer der ortsfesten Sende- und/oder Empfangseinheiten (3a - 3c) der Bodenstationen (2a - 2c) und der mindestens einen objektfesten Sende- und/oder Empfangseinheit (5) des Objektes (1) in Abhängigkeit von den Positionssignalen, die von den ortsfesten Sendeeinheiten gesendet und von der mindestens einen objektfesten Empfangseinheit empfangen wurden und/oder die von der mindestens einen objektfesten Sendeeinheit gesendet und von den ortsfesten Empfangseinheiten empfangen wurden, und die zur Ermittlung der Ortsposition der mindestens einen objektfesten Sende- und/oder Empfangseinheit (5) in Abhängigkeit von den ermittelten Entfernungen, zumindest einem der Empfangswinkel und zumindest einer der ermittelten Relativgeschwindigkeiten eingerichtet ist, **dadurch gekennzeichnet, dass** das Ortungssystem zumindest zwei an dem Objekt angeordnete objektfeste Sende- und/oder Empfangseinheiten aufweist, die voneinander beabstandet angeordnet sind, wobei die Positionsermittlungseinheit zum Ermitteln der Raumlage des Objektes in Abhängigkeit von den ermittelten Ortspositionen der jeweiligen Sende- und/oder Empfangseinheiten eingerichtet ist.

2. Bodenbasiertes Ortungssystem nach Anspruch 1, **dadurch gekennzeichnet, dass** die Positionsermittlungseinheit (4, 6) zum Ermitteln der Entfernung zwischen den ortsfesten Sende- und/oder Empfangseinheiten (3a - 3c) der Bodenstation (2a - 2c) und der objektfesten Sende- und/oder Empfangseinheit (5) in Abhängigkeit von der Signallaufzeit der Positionssignale eingerichtet ist.

3. Bodenbasiertes Ortungssystem nach Anspruch 1 oder 2, **dadurch gekennzeichnet, dass** zumindest eine Empfangseinheit eine Mehrzahl von Empfangsantennen aufweist und die Positionsermittlungseinheit zum Ermitteln des Empfangswinkels eines von den Empfangsantennen empfangenen Positionssignals in Abhängigkeit von den Empfangsantennen eingerichtet ist.

4. Bodenbasiertes Ortungssystem nach einem der vorhergehenden Ansprüche, **dadurch gekennzeichnet, dass** die Positionsermittlungseinheit zum Ermitteln der Relativgeschwindigkeit zwischen der mindestens einen Sende- und/oder Empfangseinheit der Bodenstation (2a - 2c) und der mindestens einen ortsfesten Sende- und/oder Empfangseinheit in Abhängigkeit von einer Dopplerverschiebung der empfangenen Positionssignale eingerichtet ist.

5. Bodenbasiertes Ortungssystem nach einem der vorhergehenden Ansprüche, **dadurch gekennzeichnet, dass** die ortsfesten oder objektfesten Sendeeinheiten mit einer Steuereinheit verbunden sind, die zum synchronen Aussenden der Positionssignale mittels der verbundenen Sendeeinheiten eingerichtet ist.

6. Bodenbasiertes Ortungssystem nach einem der vorhergehenden Ansprüche, **dadurch gekennzeichnet, dass** die ortsfesten, objektfesten Empfangseinheiten zum Empfangen der von den ortsfesten, objektfesten Sendeeinheiten ausgesendeten Positionssignal ausgebildet sind und die mit den ortsfesten, objektfesten Empfangseinheiten kommunizierend verbundenen Positionsermittlungseinheit zur Verifikation der Funktionsweise der Sende- und/oder Empfangseinheiten in Abhängigkeiten von den empfangenen Positionssignalen der ortsfesten, objektfesten Sendeeinheiten eingerichtet ist.

7. Bodenbasiertes Ortungssystem nach einem der vorhergehenden Ansprüche, **dadurch gekennzeichnet, dass** das Ortungssystem zur Verifikation der Funktionsweise in Abhängigkeit von einem Vergleich zwischen der Ortsposition, die mittels der von den objektfesten Empfangseinheiten empfangenen Positionssignale ermittelt wurde, und der Ortsposition, die mittels der von den ortsfesten Empfangseinheiten empfangene Positionssignale ermittelt wurde, eingerichtet ist.

8. Bodenbasiertes Ortungssystem nach einem der vorhergehenden Ansprüche, **dadurch gekennzeichnet, dass** die Sendeeinheiten zum Kodieren von Informationen in die Positionssignale und zum Aussenden solcher Positionssignale eingerichtet sind und die Empfangseinheiten zum Empfangen solcher Positionssignale und zum Extrahieren der in die Positionssignale codierten Informationen eingerichtet sind.

9. Verfahren zur bodenbasierten Ortung durch Ermittlung einer Ortsposition eines Objektes mit den Schritten: Patent- und Rechtsanwaltssozietät GbR
- Aussenden von Positionssignalen mittels mehrerer am Boden angeordneter ortsfester Sendeeinheiten und Empfangen der Positionssignale mittels mindestens einer an dem Objekt angeordneten objektfesten Empfangseinheit und/oder Aussenden von Positionssignalen mittels mindestens einer an dem Objekt angeordneten Sendeeinheit und Empfangen der Positionssignale mittels mehrerer am Boden angeordneter ortsfesten Empfangseinheiten,
- Ermitteln von Entfernungen zwischen den ortsfesten Sende- und/oder Empfangseinheiten und der mindestens einen objektfesten Sende- und/oder Empfangseinheit, eines Empfangswinkels der empfangenen Positionssignale an der jeweiligen Empfangseinheit und einer Relativgeschwindigkeit zwischen mindestens einer der ortsfesten Sende- und/oder Empfangseinheiten und mindestens einer objektfesten Sende- und/oder Empfangseinheit in Abhängigkeit von den empfangenen Positionssignalen und
- Ermitteln einer Ortsposition der mindestens einen objektfesten Sende- und/oder Empfangseinheit in Abhängigkeit von den ermittelten Entfernungen, dem mindestens einen Empfangswinkel und der mindestens einen Relativgeschwindigkeit,
**gekennzeichnet durch** Ermitteln einer Raumlage des Objektes in Abhängigkeit von der ermittelten Ortsposition mindestens zweier an den Objekten angeordneten und voneinander beanstandeter Sende- und/oder Empfangseinheiten.

10. Verfahren nach Anspruch 9, **gekennzeichnet durch** Ermitteln der Entfernung zwischen Sende- und/oder Empfangseinheit in Abhängigkeit von einer Signallaufzeit der Positionssignale.

11. Verfahren nach einem der Ansprüche 9 oder 10, **gekennzeichnet durch** Ermitteln der Relativgeschwindigkeit zwischen Sende- und Empfangseinheit in Abhängigkeit von einer Dopplerverschiebung der empfangenen Positionssignale.

12. Verfahren nach einem der Ansprüche 9 bis 11, **gekennzeichnet durch** Empfangen von mittels der ortsfesten, objektfesten Sendeeinheiten ausgesendeten Positionssignale **durch** die am Boden angeordneten Empfangseinheiten und Verifizieren der Funktionsweise der Sende- und/oder Empfangseinheiten in Abhängigkeit von den empfangenen Positionssignalen.

13. Verfahren nach einem der Ansprüche 9 bis 12, **gekennzeichnet durch** Verifizieren der Funktionsweise in Abhängigkeit von einem Vergleich zwischen der Ortsposition, die mittels der von objektsfesten Empfangseinheiten empfangenen Positionssignalen ermittelt wurden, und der Ortsposition, die mittels der von den ortsfesten Empfangseinheiten empfangenen Positionssignalen ermittelt wurde.

14. Verfahren nach einem der Ansprüche 9 bis 13, **gekennzeichnet durch** Codieren von Informationen in die Positionssignale und Aussenden solcher Positionssignale mittels der Sendeeinheit und Empfangen solcher Positionssignale mittels der Sendeeinheit und Empfangen solcher Positionssignale mittels der Empfangseinheit und Extrahieren der codierten Information aus den Positionssignalen.

## Claims

1. A ground-based positioning system for determining a location of a mobile object (1) by means of a plurality of fixed ground stations (2a-2c) which have in each case a transmitting and/or receiving unit (3a-3c), and by means of at least one transmitting and/or receiving unit (5) fixed to the object, arranged on the object (1), the transmitting units being configured for transmitting position signals and the receiving units being configured for receiving the position signals transmitted by the transmitting units and the ground-based positioning system having at least one position determination unit (4, 6), connected communicatively to at least some of the transmitting and/or receiving units (3a-3c, 5), which is configured for determining distances between the fixed transmitting and/or receiving units (3a-3c) of the ground stations (2a-2c) and the at least one transmitting and/or receiving unit (5) of the object (1), fixed to the object, for determining at least one receiving angle of the received position signals at the respective receiving unit and for determining a relative speed between at least one of the fixed transmitting and/or receiving units (3a-3c) of the ground stations (2a-2c) and the at least one transmitting and/or receiving unit (5) of the object (1), fixed to the object, in dependence on the position signals which have been transmitted by the fixed transmitting units and received by the at least one receiving unit fixed to the object and/or which have been transmitted by the at least one transmitting unit fixed to the object and received by the fixed receiving units and which is configured for determining the location of the at least one transmitting and/or receiving unit (5) fixed to the object in dependence on the distances determined, at least one of the receiving angles and at least one of the relative speeds determined, **characterized in that** the positioning system has at least two transmitting and/or receiving units fixed to the object, arranged on the object, which are arranged to be spaced apart from one another, the position determination unit being configured for determining the spatial position of the object in dependence on the determined locations of the respective transmitting and/or receiving units.

2. The ground-based positioning system as claimed in claim 1, **characterized in that** the position determination unit (4, 6) is configured for determining the distance between the fixed transmitting and/or receiving units (3a-3c) of the ground station (2a-2c) and the transmitting and/or receiving unit (5) fixed to the object in dependence on the signal transit time of the position signals.

3. The ground-based positioning system as claimed in claim 1 or 2, **characterized in that** at least one receiving unit has a plurality of receiving antennas and the position determination unit is configured for determining the receiving angle of a position signal, received by the receiving antennas, in dependence on the receiving antennas.

4. The ground-based positioning system as claimed in one of the preceding claims, **characterized in that** the position determination unit is configured for determining the relative speed between the at least one transmitting and/or receiving unit of the ground station (2a-2c) and the at least one fixed transmitting and/or receiving unit in dependence on a Doppler shift of the received position signals.

5. The ground-based positioning system as claimed in one of the preceding claims, **characterized in that** the fixed transmitting units or those fixed to an object are connected to a control unit which is configured for synchronously emitting the position signals by means of the connected transmitting units.

6. The ground-based positioning system as claimed in one of the preceding claims, **characterized in that** the fixed receiving units fixed to the object are designed for receiving the position signals emitted by the fixed transmitting units fixed to the object and the position determination unit connected communicatively to the fixed receiving units fixed to the object is configured for verifying the operation of the transmitting and/or receiving units in dependence on the received position signals of the fixed transmitting units fixed to the object.

7. The ground-based positioning system as claimed in one of the preceding claims, **characterized in that** the positioning system is configured for verifying the operation in dependence on a comparison between the location which has been determined by means of the position signals received by the receiving units fixed to the object and the location which has been determined by means of the position signals received by the fixed receiving units.

8. The ground-based positioning system as claimed in one of the preceding claims, **characterized in that** the transmitting units are configured for coding information into the position signals and for emitting such position signals and the receiving units are configured for receiving such position signals and for extracting the information coded into the position signals.

9. A method for ground-based positioning by determining a location of an object, comprising the steps:
- emitting position signals by means of a number of fixed transmitting units arranged on the ground and receiving the position signals by means of at least one receiving unit, fixed to the object, arranged on the object, and/or emitting position signals by means of at least one transmitting unit arranged on the object and receiving the position signals by means of a number of fixed receiving units arranged on the ground,
- determining distances between the fixed transmitting and/or receiving units and the at least one transmitting and/or receiving unit fixed to the object, a receiving angle of the received position signals at the respective receiving unit and a relative speed between at least one of the fixed transmitting and/or receiving units and at least one transmitting and/or receiving unit fixed to the object in dependence on the received position signals, and
- determining a location of the at least one transmitting and/or receiving unit, fixed to the object, in dependence on the distances determined, the at least one receiving angle and the at least one relative speed,
**characterized by** determining a spatial position of the object in dependence on the location of at least two transmitting and/or receiving units spaced apart from one another, arranged on the objects.

10. The method as claimed in claim 9, **characterized by** determining the distance between transmitting and/or receiving unit in dependence on a signal transit time of the position signals.

11. The method as claimed in one of claims 9 or 10, **characterized by** determining the relative speed between transmitting and receiving unit in dependence on a Doppler shift of the received position signals.

12. The method as claimed in one of claims 9 to 11, **characterized by** receiving position signals emitted by means of the fixed transmitting units, fixed to the object, by the receiving units arranged on the ground and verifying the operation of the transmitting and/or receiving units in dependence on the received position signals.

13. The method as claimed in one of claims 9 to 12, **characterized by** verifying the operation in dependence on a comparison between the location which was determined by means of the position signals received by receiving units fixed to the object, and the location which was determined by means of the position signals received by the fixed receiving units.

14. The method as claimed in one of claims 9 to 13, **characterized by** coding information into the position signals and emitting such position signals by means of the transmitting unit and receiving such position signals by means of the receiving unit and extracting the coded information from the position signals.

## Revendications

1. Système de localisation basé au sol, destiné à déterminer une position locale d'un objet mobile (1), comprenant une pluralité de stations au sol (2a à 2c) stationnaires, qui comportent chacune une unité émettrice et/ou réceptrice (3a à 3c) et au moins une unité émettrice et/ou réceptrice (5) stationnaire sur l'objet, placée sur l'objet (1), les unités émettrices étant agencées pour émettre des signaux de position et les unités réceptrices étant agencées pour réceptionner les signaux de position émis par les unités émettrices et le système de localisation basé au sol comportant au moins une unité de recherche de la position (4, 6) reliée en communication avec au moins une partie des unités émettrices et/ou réceptrices (3a à 3c, 5), qui est agencée pour déterminer des distances entre les unités émettrices et/ou réceptrices (3a à 3c) stationnaires des stations au sol (2a à 2c) et l'au moins une unité émettrice et/ou réceptrice (5) stationnaire sur l'objet de l'objet (1), pour déterminer au moins un angle de réception des signaux de position réceptionnés sur l'unité réceptrice concernée et pour déterminer une vitesse relative entre au moins l'une des unités émettrices et/ou réceptrices (3a à 3c) stationnaires des stations au sol (2a à 2c) et l'au moins une unité émettrice et/ou réceptrice (5) stationnaire sur l'objet de l'objet (1) en fonction des signaux de position qui ont été émis par les unités émettrices stationnaires et réceptionnés par l'au moins une unité réceptrice stationnaire sur l'objet et/ou qui ont été émis par l'au moins une unité émettrice stationnaire sur l'objet et qui ont été réceptionnés par les unités réceptrices stationnaires et qui est agencée pour déterminer la position locale de l'au moins une unité émettrice et/ou réceptrice (5) stationnaire sur l'objet, en fonction des distances déterminées, d'au moins l'un des angles de réception et de l'au moins une des vitesses relatives déterminées, **caractérisé en ce que** le système de localisation comporte au moins deux unités émettrices et/ou réceptrices stationnaires sur l'objet, placées sur l'objet, qui sont placées en étant écartées l'une de l'autre, l'unité de recherche de la position étant agencée pour déterminer la position dans l'espace de l'objet en fonction des positions locales déterminées des unités émettrices et/ou réceptrices concernées.

2. Système de localisation basé au sol selon la revendication 1, **caractérisé en ce que** l'unité de recherche de la position (4, 6) est agencée pour déterminer la distance entre les unités émettrices et/ou réceptrices (3a à 3c) stationnaires de la station au sol (2a à 2c) et les unités émettrices et/ou réceptrices (5) stationnaires sur l'objet en fonction du temps de propagation de signal des signaux de position.

3. Système de localisation basé au sol selon la revendication 1 ou la revendication 2, **caractérisé en ce qu'**au moins une unité réceptrice comporte une pluralité d'antennes réceptrices et l'unité de recherche de la position est agencée pour déterminer l'angle de réception d'un signal de position réceptionné par les antennes réceptrices, en fonction des antennes réceptrices.

4. Système de localisation basé au sol selon l'une quelconque des revendications précédentes, **caractérisé en ce que** l'unité de recherche de la position est agencée pour déterminer la vitesse relative entre l'au moins une unité émettrice et/ou réceptrice de la station au sol (2a à 2c) et l'au moins une unité émettrice et/ou réceptrice stationnaire, en fonction d'un décalage Doppler des signaux de position réceptionnés.

5. Système de localisation basé au sol selon l'une quelconque des revendications précédentes, **caractérisé en ce que** les unités émettrices stationnaires ou stationnaires sur l'objet sont reliées avec une unité de commande, qui est agencée pour l'émission synchrone des signaux de position au moyen des unités émettrices reliées.

6. Système de localisation basé au sol selon l'une quelconque des revendications précédentes, **caractérisé en ce que** les unités réceptrices stationnaires, stationnaires sur l'objet sont conçues pour réceptionner les signaux de position émis par les unités émettrices stationnaires, stationnaires sur l'objet et l'unité de recherche de la position reliée en communication avec les unités réceptrices stationnaires, stationnaires sur l'objet est agencée pour vérifier le mode de fonctionnement des unités émettrices et/ou réceptrices, en fonction des signaux de position réceptionnés des unités émettrices stationnaires, stationnaires sur l'objet.

7. Système de localisation basé au sol selon l'une quelconque des revendications précédentes, **caractérisé en ce que** le système de localisation est agencé pour vérifier le mode de fonctionnement en fonction d'une comparaison entre la position locale qui a été déterminée au moyen des signaux de position réceptionnés par les unités réceptrices stationnaires sur l'objet et la position locale qui a été déterminée au moyen des signaux de position réceptionnés par les unités réceptrices stationnaires.

8. Système de localisation basé au sol selon l'une quelconque des revendications précédentes, **caractérisé en ce que** les unités émettrices sont agencées pour coder des informations dans les signaux de position et pour émettre de tels signaux de position et les unités réceptrices sont agencées pour réceptionner de tels signaux de position et pour extraire les informations codées dans les signaux de position.

9. Procédé destiné à la localisation basée au sol par détermination d'une position locale d'un objet, comportant les étapes :
- émission de signaux de position au moyen de plusieurs unités émettrices stationnaires placées au sol et réception des signaux de position au moyen d'au moins une unité réceptrice stationnaire sur l'objet, placée sur l'objet et/ou émission de signaux de position au moyen d'au moins une unité émettrice placée sur l'objet et réception des signaux de position au moyen de plusieurs unités réceptrices stationnaires placées au sol,
- détermination de distances entre les unités émettrices et/ou réceptrices stationnaires et l'au moins une unité émettrice et/ou réceptrice stationnaire sur l'objet, d'un angle de réception des signaux de position réceptionnés sur l'unité réceptrice concernée et d'une vitesse relative entre au moins l'une des unités émettrices et/ou réceptrices stationnaires et au moins l'une des unités émettrices et/ou réceptrices stationnaires sur l'objet, en fonction des signaux de position réceptionnés,
- détermination d'une position locale de l'au moins une unité émettrice et/ou réceptrice stationnaire sur l'objet, en fonction des distances déterminées, de l'au moins un angle de réception et de l'au moins une vitesse relative,
**caractérisé par** la détermination d'une position dans l'espace de l'objet, en fonction de la position locale déterminée d'au moins deux unités émettrices et/ou réceptrices placées sur l'objet et écartées l'une de l'autre.

10. Procédé selon la revendication 9, **caractérisé par** la détermination de la distance entre unité émettrice et/ou réceptrice, en fonction du temps de propagation de signal des signaux de position.

11. Procédé selon l'une quelconque des revendications 9 ou 10, **caractérisé par** la détermination de la vitesse relative entre unité émettrice et réceptrice, en fonction d'un décalage Doppler des signaux de position réceptionnés.

12. Procédé selon l'une quelconque des revendications 9 à 11, **caractérisé par** la réception de signaux de position émis au moyen des unités émettrices stationnaires, stationnaires sur l'objet par les unités réceptrices placées au sol et la vérification du mode de fonctionnement des unités émettrices et/ou réceptrices, en fonction des signaux de position réceptionnés.

13. Procédé selon l'une quelconque des revendications 9 à 12, **caractérisé par** la vérification du mode de fonctionnement, en fonction d'une comparaison entre la position locale qui a été déterminée au moyen des signaux de position réceptionnés par les unités réceptrices stationnaires sur l'objet et la position locale qui a été déterminée au moyen des signaux de position réceptionnés par les unités réceptrices stationnaires.

14. Procédé selon l'une quelconque des revendications 9 à 13, **caractérisé par** le codage d'informations dans les signaux de position et l'émission de tels signaux de position au moyen de l'unité émettrice et la réception de tels signaux de position au moyen de l'unité émettrice et la réception de tels signaux de position au moyen de l'unité réceptrice et l'extraction des informations codées à partir des signaux de position.
